(19) Europäisches Patentamt / European Patent Office / Office européen des brevets

(11) **EP 3 885 093 A1**

(12) **EUROPEAN PATENT APPLICATION**
published in accordance with Art. 153(4) EPC

(43) Date of publication:
**29.09.2021 Bulletin 2021/39**

(21) Application number: **19900989.5**

(22) Date of filing: **25.04.2019**

(51) Int Cl.:
**B29B 9/10** (2006.01)          **B29B 9/12** (2006.01)
**B29B 7/88** (2006.01)          **B29B 7/82** (2006.01)
**C08K 3/34** (2006.01)          **C08K 3/08** (2006.01)
**C08J 3/22** (2006.01)

(86) International application number:
**PCT/KR2019/005008**

(87) International publication number:
**WO 2020/130239 (25.06.2020 Gazette 2020/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.12.2018 KR 20180166563**

(71) Applicant: **Macsumsuk GM Co., Ltd.**
**Gyeongsangbuk-do 38911 (KR)**

(72) Inventor: **KWAK, Sung Gun**
**Gyeongsangbuk-do 38882 (KR)**

(74) Representative: **Loo, Chi Ching et al**
**Albright IP Limited**
**County House**
**Bayshill Road**
**Cheltenham, Gloucestershire GL50 3BA (GB)**

(54) **METHOD FOR MANUFACTURING ANTIMICROBIAL PLASTIC MASTERBATCH USING MACSUMSUK GRANULES**

(57) The present invention relates to a method of manufacturing a masterbatch to be used for manufacturing a plastic product and relates to a method of manufacturing a Macsumsuk powder antibacterial plastic masterbatch in which when a pellet is melted, porous plastic powders including an antibacterial substance and using Macsumsuk as a raw material is added to exhibit a high emissivity of the far-infrared rays and an excellent antibacterial effect.

FIG. 8

**Description**

Technical Field

The present invention relates to a method of manufacturing a masterbatch to be used for manufacturing a plastic product and relates to a method of manufacturing a Macsumsuk powder antibacterial plastic masterbatch in which when a pellet is melted, porous plastic powders including an antibacterial substance and using Macsumsuk as a raw material is added to exhibit an excellent antibacterial effect.

Background Art

Antimicrobial plastics are known to play a role in antiseptic and antimicrobial activities, anti-fungal ability, anti-corrosion, freshness maintenance, odor removal, etc. as antimicrobial substances are contained in the plastics.
As a technology related to the manufacture of antimicrobial plastics, "a material for antimicrobial plastic, an antimicrobial plastic, a masterbatch for manufacturing an antimicrobial plastic, and a manufacturing method of the antimicrobial plastic" (Korean Patent Registration No. 10-1334283, Patent Literature 1) discloses a technique related to a plastic material including an uncoated zinc oxide of a powder type consisting of secondary particles in which the primary particles are aggregated.
Since the zinc oxide has an excellent level of resistance to poisons or bacteria, it acts on special enzymes that have oxygen and digestive metabolism, making it possible to neutralize single-celled animals such as bacteria, viruses, and fungi. Therefore, it is known to catalyze the suffocation or the starvation of bacteria.
The zinc oxide is a product that has been widely used due to its excellent UV-blocking effect. However, it is difficult to exert a lasting effect and there is a problem of inhibiting the properties of plastic.
In addition, there have been many efforts to apply the existing silver nanoparticles, but there is a problem of separation of the silver nanoparticles. There is also a problem that the quality thereof is uneven and the antimicrobial power is poor, because it is contained in the plastic itself, rather than a surface coating method.

Patent Literature

Patent Literature 1: Korean Patent Registration No. 10-01334283 (November 22, 2013)

Disclosure

Technical Problem

The method of manufacturing a Macsumsuk powder antibacterial plastic masterbatch of the present invention is conceived to overcome the problem generated in the related art and to provide a manufacturing method for exhibiting an excellent antibacterial effect when being used as a masterbatch.
Particularly, powders in which empty spaces are formed inside thereof is formed by using Macsumsuk, and powders are extruded while the empty spaces of the powders are filled with a plastic raw material, so that a bond between masterbatches in a plastic product molding process is smooth, and Macsumsuk powders and the plastic raw material are not easily separated, thereby preventing the deterioration of physical properties of the plastic product.
In addition, silver nanoparticles, which is an antibacterial substance, is added and processed in a powder molding process, the powders are firmly integrated in the process of sintering the powders, and a phenomenon of the powders being biased to one place by specific gravity or centrifugal force in a melting treatment process for manufacturing a plastic product is prevented, so that the antibacterial effect is exhibited evenly on the entire product.
Far-infrared rays and antibacterial components generated from the Macsumsuk powders on the surface or the contents of a molded plastic product suppress various bacteria and mold, maintain freshness for a long period of time, and prevent deterioration of physical properties of the plastic product.

Technical solution

According to one aspect of the present invention so as to accomplish these objects, there is provided to a method of manufacturing an antibacterial plastic masterbatch, including:

a slurry manufacturing step of mixing a Macsumsuk pulverized product and water in a certain ratio to obtain a slurry;

a first mixing step of adding an antibacterial substance and a foaming agent to the slurry and further mixing the mixture to obtain a granulation mixture;

a powder molding step of molding the granulation mixture to a granular shape having an average particle size within a range of 0.1 to 1.5 m/m by using a granulator to obtain sintered Macsumsuk powders;

a second mixing step of preparing a pellet-shaped plastic raw material and mixing the material with the Macsumsuk powders to manufacture the pellet mixture;

an extruding step of stirring the pellet mixture and melting and extruding the pellet mixture in a condition of 180°C to 350°C; and

a cooling cutting step of cooling and cutting an extrudate obtained by the melting and extruding to manufacture a masterbatch.

In the above configuration, the method of manufacturing an antibacterial plastic masterbatch further includes a firing step of firing the Macsumsuk powders after the powder molding step to have a shape in which empty spaces are formed inside thereof and pores are formed on surfaces; wherein the empty spaces inside the Macsumsuk powders are filled with a plastic resin raw material melted in the extruding step upon pulverization.

In addition, the Macsumsuk pulverized product is obtained by firing Macsumsuk ore at a high temperature and performing wet pulverization.

In addition, the Macsumsuk powders in the second mixing step are mixed to be included by 2 to 70 weight% with respect to 100 weight% of the pellet mixture.

In addition, wherein the antibacterial substance is silver nanoparticles.

In addition, in the second mixing step, the prepared powders are pulverized, and the pulverized product is mixed with the plastic raw material.

Advantageous Effects

According to the present invention, by mixing the Macsumsuk powders with self-antimicrobial properties to a plastic raw material in a pellet form at a certain ratio to form a masterbatch, it can be practically useful in real life due to the antimicrobial and sterilizing functions generated on the surface and material of the plastic products.

In addition, by sterilizing and suppressing microorganisms and fungi that inhabit the surface of the plastic product or the packaged contents, the freshness of the package can be increased to contribute to the promotion of national health.

Particularly, powders in which empty spaces are formed inside thereof is formed by using Macsumsuk, and powders are extruded while the empty spaces of the powders are filled with a plastic raw material, so that a bond between masterbatches in a plastic product molding process is smooth, and Macsumsuk powders and the plastic raw material are not easily separated, thereby preventing the deterioration of physical properties of the plastic product.

In addition, silver nanoparticles, which is an antibacterial substance, is added and processed in a powder molding process, the powders are firmly integrated in the process of sintering the powders, and a phenomenon of the powders being biased to one place by specific gravity or centrifugal force in a melting treatment process for manufacturing a plastic product is prevented, so that the antibacterial effect is exhibited evenly on the entire product.

Far-infrared rays and antibacterial components generated from the Macsumsuk powders on the surface or the contents of a molded plastic product suppress various bacteria and mold, maintain freshness for a long period of time, and prevent deterioration of physical properties of the plastic product.

Brief Description of Drawings

The above and other objects, features and advantages of the present invention will be more apparent from the following detailed description taken in conjunction with the accompanying drawings, in which:

FIG. 1 is a photomicrograph of Macsumsuk powders;

FIG. 2 is a graph illustrating an emissivity of Macsumsuk;

FIG. 3 is a graph illustrating a spectral radiance of Macsumsuk;

FIG. 4 is a photomicrograph illustrating shape of Macsumsuk powders of the present invention;

FIG. 5 is a photograph illustrating an example of a masterbatch prepared in the present invention;

FIG. 6 is a photograph illustrating successively from left to right plastic raw materials, Macsumsuk powders, and a prepared masterbatch according to the present invention;

FIG. 7 is a table showing the results of a microbial measurement experiment of comparison object containers and a plastic container produced by the present invention; and

FIG. 8 is a photograph showing a state of tomato storage experiments using a food packaging container and a commercial container using a masterbatch according to the present invention.

Best Mode

Mode for Invention

Hereinafter, a method of manufacturing a Macsumsuk powder antibacterial plastic masterbatch according to the present invention is described in detail with reference to the accompanying drawings.

1. Slurry manufacturing step

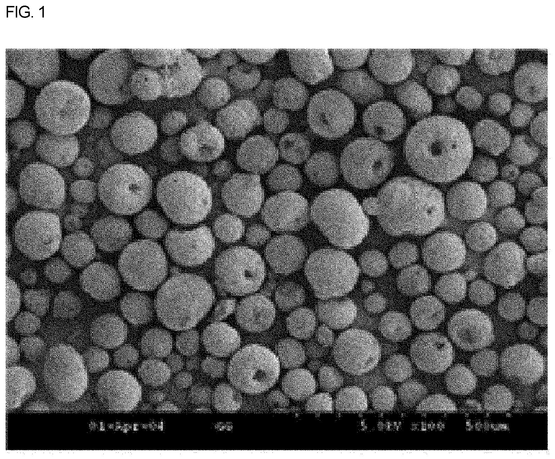

A Macsumsuk pulverized product and water are mixed in a certain ratio to obtain a slurry.
The Macsumsuk pulverized product may be used by pulverizing ore, but it is preferable to use a product pulverized after sintering, if possible.
Macsumsuk is disclosed in various related documents filed by the present applicant, and FIG. 1 shows a micrograph of Macsumsuk powders of 0.1 to 100 $\mu$m.
The components of the Macsumsuk are shown in Table 1 below.

[Table 1]

| <Components and contents of Macsumsuk> | |
|---|---|
| Name of component | Content (weight%) |
| Silicon dioxide ($SiO_2$) | 68.80 |
| Aluminum oxide ($Al_2O_3$) | 12.99 |
| Iron oxide ($Fe_2O_3$) | 2.47 |
| Calcium oxide (CaO) | 1.99 |
| Magnesium oxide (MgO) | 0.56 |
| Potassium oxide ($K_2O$) | 4.53 |
| Sodium oxide ($Na_2O$) | 6.25 |
| Titanium dioxide ($TiO_2$) | 0.23 |
| Phosphorus pentoxide ($P_2O_5$) | 0.06 |
| Manganese oxide (MnO) | 0.06 |
| Loss on heat | 2.09 |

Macsumsuk is a rock belonging to quartz porphyry in igneous rocks and is easily weathered and broken as a whole. In particular, white feldspar is often kaolinized in many cases, and biotite is mostly oxidized and scattered in the form of iron oxide.
Macsumsuk contains a large amount of amphibole, and includes a large amount of magnesium oxide (MgO) so $\alpha$ rays exist. It is known that Macsumsuk has a good effect on living organisms.
The wavelength generated from Macsumsuk is within the range of 8 to 14 $\mu$m, which is known as the far-infrared rays of the wavelength band that is most beneficial on living bodies. It is known that the far-infrared rays in this wavelength band activate biological cells to promote metabolism.
In view of the fact that the emissivity of the far-infrared rays generated when Macsumsuk is finely pulverized

(1 to 6 $\mu$m) is higher than the emissivity of the far-infrared rays generated from Macsumsuk in the rock state, according to the present invention, Macsumsuk is pulverized, particularly pulverized after calcination, and manufactured in a powder form, so that Macsumsuk is used as a carrier in which a molten plastic raw material is accommodated. In this form, the plastic raw material and mineral components of Macsumsuk form a solid bond therein, the deterioration of physical properties such as the strength of the plastic injection product is suppressed, and the deterioration of the appearance can be prevented.

The action of Macsumsuk shows functions such as adsorption by porosity, precipitation of minerals, control of the water quality, and increase of dissolved oxygen amount in water.

In particular, Macsumsuk reacts with oxygen to have $O^2$ and OH (hydroxyl group) in a very high oxidation form, and thus has very strong oxidation and reduction properties. Therefore, Macsumsuk penetrates cell membranes of bacteria, degenerates proteins of the cell membranes to destroy the bacterial cells, and has an effect of killing bacteria.

This means that the use amount of separate antibacterial substances can be minimized.

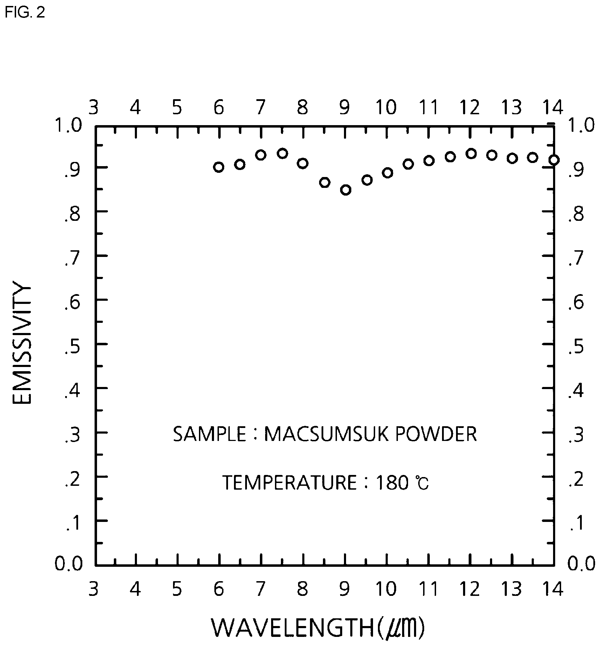

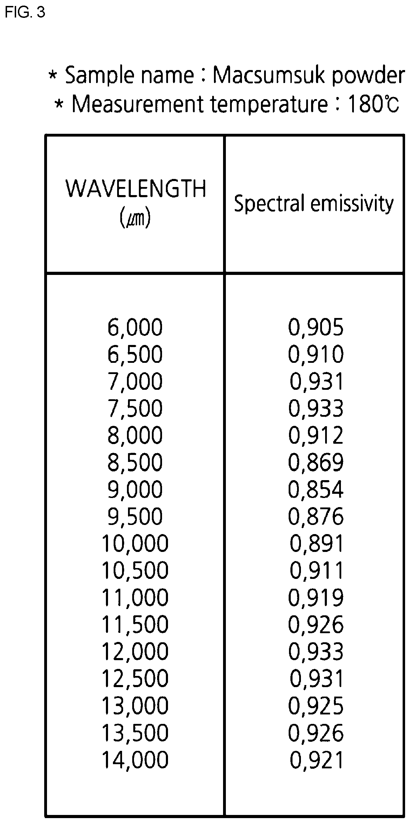

The emissivity of the far-infrared rays of Macsumsuk is shown in FIG. 2, and the spectral radiance thereof is shown in FIG. 3. The unit of the emissivity is W/m$^2\cdot\mu$m based on the measurement at 180°C, and it can be confirmed that it shows a high far-infrared emissivity similar to that of a black body. The graphs of FIGS. 2 and 3 are the results measured by Korea Far Infrared Association Co.

The sintered and pulverized product of Macsumsuk ore is obtained by first introducing Macsumsuk raw materials into a furnace and adjusting the temperature and the pressure to reach 1,200°C.

In this case, after the temperature of the furnace is raised to 1,040°C, the inside of the furnace is made into an incomplete combustion state, the pressure in the furnace is raised to make the internal temperature of the furnace uniform, the sintering state of the entire raw materials is stabilized, and then the temperature is caused to reach 1,200°C.

The temperature is maintained at 1,200°C for one hour, so that chemical components of Macsumsuk form a recrystallization bond, that is, a covalent bond.

When the sintering is completed, the temperature is gradually lowered to extinguish, and then reaches 800°C in five hours. When the temperature reaches 800°C, the furnace is completely opened so that the temperature is cooled by 100°C per hour. Then, the obtained sintered body is pulverized into particles of 0.1 to 100 $\mu$m by using a wet pulverizer.

The mixing ratio of the Macsumsuk pulverized product and water is preferably 2:1 in a weight ratio.

If the content of water exceeds the above ratio, it becomes difficult to maintain the shape of the powders in the molding process. If the content of water is less than the above specific ratio, granulation becomes difficult.

2. First mixing step

An antibacterial substance and a foaming agent are added to the slurry and further mixed to obtain a granulated mixture.

As the antibacterial substance, silver nanoparticles are preferably used.

Corn powder may be further mixed in the manufacturing.

Specifically, if 100 parts by weight (0.5 to 2.5) of starch of potatoes, sweet potatoes, or com is mixed to be used in a film for agriculture and fruit tree sapling, starch is degenerated by natural microorganisms, and the far-infrared function of Macsumsuk is converted to the function of compost, so that the crops may grow healthy.

As the foaming agent, a mixture of calcium carbonate and sodium carbonate is preferably used.

The foaming agent generates carbon dioxide by thermal degeneration when firing, carbon dioxide generated inside the powders forms pores inside the powders. Then, gas is released to a portion between powder particles to increase porosity, and plastic raw materials penetrate inside to improve physical properties during plastic injection molding.

In addition, carbon dioxide formed on the surface of the powders increases the surface area of the powders, so that a bond with plastic raw materials outside the powders is smoothly formed to improve physical properties.

At this time, the use amount of the foaming agent is preferably 1 to 10 parts by weight based on 100 parts by weight of the slurry.

The use amount of the antibacterial substance is 0.001 to 0.1 parts by weight based on 100 parts by weight of the slurry.

3. Powder molding step

The granulation mixture is molded into a granular shape having an average particle size within the range of 0.1 to 100 $\mu$m by using a granulator to obtain Macsumsuk powders.

It is preferable to apply a spray drying method to the granulator.

In the powder molding step, more specifically, an air heating furnace burner of the granulator is ignited to raise the temperature, so that the internal temperature of the furnace reaches 1,000°C. When the internal temperature reaches 1,000°C, a blower is operated to move heat inside a cyclone. When the internal temperature reaches 300°C, a nozzle is put in the lower portion of the cyclone, and the finely pulverized granulation mixture is pumped up at a pump pressure of 40 kgf/cm$^2$ to the upper point where the weight flows.

At this time, the emitted liquid drops while swirling due to the hot air flowing from the upper side of the cyclone. Accordingly, a ring shape is formed, the moisture contained in the raw material evaporates due to the internal heat maintained at 300°C, and thus porous Macsumsuk powders having a particle size of 0.1 to 1.5 mm are obtained.

In this process, if the water content of the sludge is increased, the moisture contained in the powder particles rapidly evaporates inside, the pressure in the bubbles formed at this time increases due to temperature expansion, and when the pressure exceeds a certain pressure, the spherical surface is penetrated to form an annular granular shape. The powders in an annular shape from which water vapor escapes form small pores at where the water molecules were located. The position ruptured inside has an annular shape of 0.1 to 1.5 m/m and has a role of reducing the specific gravity of the powders and a role of as a micron-sized carrier.

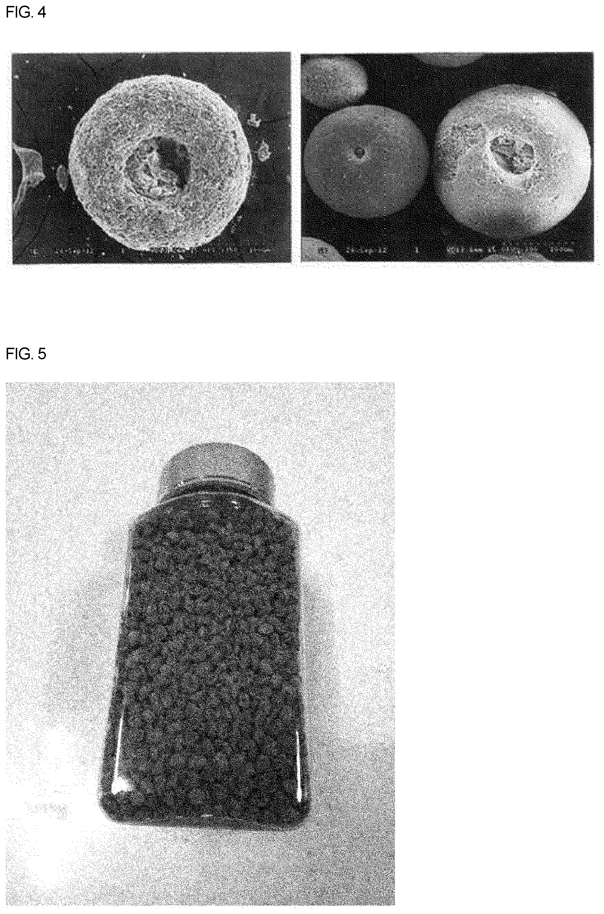

The manufactured Macsumsuk powders have a shape close to a sphere as shown in FIG. 4, and pulverized powder size is about 0.1 to 10 μm.

The left side of FIG. 4 is a photograph enlarged by 400 times, and the right-hand side is a photograph enlarged by 300 times.

3-1. Firing step;

After the powder molding step, a step of firing the Macsumsuk powders to have porosity may be further performed.

The suitable firing temperature is in the temperature range of 100°C to 300°C, and the firing removes moisture when powders are formed, uniformly increases the strength thereof, and thus helps uniform collapse of the granular form when an extruding step is performed.

As a result, an annular powder shape can be maintained, and thus, a state in which the space inside the annular shape is filled with the plastic raw material in the injection process can be maintained. Therefore, excellent physical properties can be more effectively maintained.

4. Second mixing step

A pellet-shaped plastic raw material is prepared, and mixed with the Macsumsuk powders to manufacture a pellet mixture.

At this time, a mixing ratio of the plastic raw material and the Macsumsuk powders can vary depending on the quality of the plastic raw material and physical properties of the plastic product to be injection molded.

As the plastic raw material, linear low density polyethylene (LLDPE), low density polyethylene (LDPE), high density polyethylene (HDPE), polypropylene (PP), polystyrene (PS), polyethylene terephthalate (PET), polybutylene terephthalate (PBT), polyvinylchloride (PVC), a styrene acrylonitrile copolymer (SAN), acrylonitrile butadiene styrene (ABS), Tritan, ECOJEN, PETG, PCTG, polyphenylsulfone (PPSU), and polycarbonate (PC), and the like can be used.

As the synthetic resins described above, non-degradable thermoplastic resins and some soft thermosetting resins can be used.

When the above non-degradable thermoplastic resin, a plastic raw material, a very soft thermosetting resin, and the like are used, the mixing ratio with the Macsumsuk powders is preferably 20 to 70 weight% of the Macsumsuk powders with respect to the entire pellet mixture. When extruding injection molding is performed with the prepared pellets with 70% of the Macsumsuk raw material, 2 to 13 weight% is preferable.

In addition, powders may be pulverized and mixed before the mixing with the plastic raw material.

5. Extruding step

The pellet mixture is stirred, and melting and extruding are performed in the condition of 180°C to 350°C.

The extruding step proceeds with a conventional melt extruder, but the temperature is limited to the above range.

If the temperature exceeds the above range, extrusion may not be smoothly performed. If the temperature is less than the above temperature, melting is not smoothly performed. Therefore, the Macsumsuk powders cannot form a uniform dispersion state.

6. Cooling cutting step

The melted and extruded extrudate is cooled and cut to manufacture a masterbatch.

FIG. 5 shows an example of a masterbatch manufactured in the above processes.

The masterbatch manufactured as shown in the drawing exhibits a translucent dark brown color.

The manufactured masterbatch is mixed with the plastic product raw material in a certain ratio, and formed into a product by the method of extrusion, injection, blow, and the like.

In this manufacturing method, the silver nanocomponents which is an antimicrobial substance is completely maintained in the Macsumsuk powder, Macsumsuk powders are evenly distributed in the plastic raw materials, the shape thereof is not easily collapsed, and a state of being evenly connected to the resin component can be maintained.

Due to this, together with the anti-microbial effects of antibacterial substances, the far-infrared radiation effect and the water molecule activation effect can be exhibited based on properties specific to Macsumsuk (elvan, rare-earth element, Illite, mica, zeolite, bentonite).

[Example 1]

<Manufacturing of Macsumsuk slurry>

The Macsumsuk raw material pulverized into 0.1 to 5 mm was loaded into a furnace, and the temperature and pressure were adjusted so that the temperature was caused to reach 1,200°C.

In the first ignition, the pressure of the LPG gas (hereinafter referred to as "gas") in the furnace was adjusted by 0.1 kg/hr so that the temperature was caused to reach 300°C in one hour.

After one hour, the gas pressure was adjusted by 0.125 kg/hr so that the temperature was caused to reach 500°C in one hour.

When the temperature reached 500°C, the gas pressure was adjusted by 0.15 kg/hr so that the temperature was caused to reach 700°C in one hour.

When the temperature in the furnace reached 700°C, the gas pressure was adjusted by 0.2 kg/hr so that the temperature was caused to reach 850°C.

When the temperature reached 850°C, in a state in which the gas pressure was fixed to 0.2 kg/hr, the temperature was maintained for about one hour for complete combustion of the organic substances contained in the raw materials.

After the combustion of the organic substance was completed, the gas pressure was adjusted by 0.25 kg/hr, and the temperature was raised to 950°C in one hour.

When the temperature reached 950°C, the gas pressure was again raised by 0.3kg/hr to raise the temperature to 1,040°C in 1 hour.

After one hour, when the temperature reached 1,040°C, the inside of the furnace was made into an incomplete combustion state, and the pressure inside the furnace was raised to make the inside temperature of the furnace uniform, so that the sintering state of the entire raw material is stabilized. Thereafter, the furnace pressure was maintained and the temperature was caused to reach 1,200°C in five hours.

When the temperature reached 1,200°C, in a state in which the gas pressure was fixed, the exhaust pressure was reduced to raise the furnace pressure, and the temperature maintained 1,200°C for one hour, so that the chemical components of Macsumsuk form a recrystallization bond, that is, covalent bond.

When the sintering was completed, the furnace was turned off, the exhaust port was closed, and the temperature was gradually lowered for extinguishment. Then, the temperature was caused to reach 800°C in five hours. When the temperature reached 800°C, the furnace was completely opened, and the temperature was cooled at 100°C per hour.

Thereafter, the obtained sintered body was first pulverized to 0.1 to 100 $\mu$m particles or less with a wet pulverizer.

Then, the sintered particle pulverized to 0.1 to 100 $\mu$m or less was mixed with water in a weight ratio of 2:1, was introduced into the wet pulverizer to manufacture a liquid mixture which is finely pulverized to an average particle size of 0.1 to 100 $\mu$m or less, that is, a slurry.

[Example 2]

<Manufacturing of Macsumsuk powder>

In order to increase the porosity of the final powders in the slurry manufactured in Example 1, a mixture of calcium carbonate and sodium carbonate in a weight ratio of 1:1 was added as a foaming agent to a weight ratio of 5 with respect to 100 parts by weight of the solid content of the slurry, and 1 part by weight of silver nanoparticles was added as the antibacterial substance, to manufacture a granulation mixture.

Thereafter, a burner of an air heating furnace is ignited as a spray drying method for granulation, the temperature was raised for two hours so that the temperature inside the furnace reached 1,000°C. When the temperature reached 1,000°C, the blower is operated to move heat into the cyclone. When the internal temperature reached 300°C, a nozzle was put in the lower portion of the cyclone, and the finely pulverized granulation mixture was pumped up at a pump pressure of 40 kgf/cm$^2$ to the upper point where the weight flowed.

The emitted liquid drops while swirling due to the hot air flowing from the upper side of the cyclone. Therefore, a ring shape was formed, the moisture contained in the raw material evaporated due to the internal heat maintained at 300°C, and thus porous powders having a particle size of 0.1 to 1.5 mm were obtained.

In this process, if the water content of the sludge was increased, the moisture contained in the powder particles was rapidly evaporated inside, and the pressure in the bubbles formed at this time was increased due to temperature expansion. When the pressure exceeds a certain pressure, the spherical surface was penetrated, and an annular granular shape was formed. The powders in an annular granular shape from which water vapor escaped form small pores at where the water molecules were located. The position ruptured inside has an annular shape of 0.1 to 1.5 m/m and has a role of reducing the specific gravity of the powders and a role as a micron-sized carrier.

In the subsequent section, the powders were caused to pass through sections set from 100°C to 300°C over 1 to 8 sections in one hour to remove residual moisture and foreign substances contained in the powders to manufacture the Macsumsuk powders.

[Example 3]

<Manufacturing of masterbatch>

Low-density polyethylene (LDPE) was prepared as the plastic raw material, mixing was performed such that the Macsumsuk powders was 30 weight% and LDPE was 70 weight%, and the mixture was introduced into a melt extruder.

The inside temperature of the furnace of the melt extruder was set to 180°C to 350°C, the plastic raw material was melted, and extrusion was performed while Macsumsuk powders are evenly dispersed in the plastic raw material. After the extrudate was cooled and cut to manufacture a masterbatch.

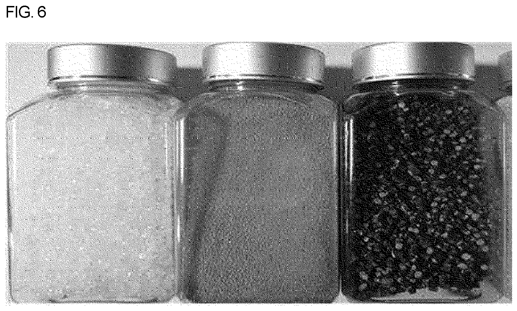

In FIG. 6, the LDPE plastic raw material is shown on the left, the Macsumsuk powder is shown in the middle, and the master batch is shown on the right.

[Example 4]

<Manufacturing of antibacterial plastic molded products>

The masterbatch manufactured in Example 3 was used as a raw material to manufacture a plastic container (Trade name: "Wellion Lock") by commissioning to an injection company.

<Experimental Example 1> Antibacterial activity measurement

The results of testing the antibacterial activity of the antimicrobial plastics of the Macsumsuk powders and freshness is described. (The test was completed in Food Science Research Institute of Kyungil University on December 14, 2018, and the results were written in a test report.)

As for the test method, a certain amount of the pre-culture solution of the test strain at a certain concentration was inoculated into a container of a sample (Example 4). Then, the same sample was press-bonded thereto. Immediately after the press-bonding, the number of live cells was immediately checked (A). After 24 hours from the press-bonding, the number of live bacteria was checked (B). As the test strain, salmonella typhimurium (KCTC 1925) was used.

The measurement formula is as follows.

Antibacterial activity test (TI-10-008; press-bonding method is used):

$$\text{Rate of bacteria reduction (\%)} = (A - B) / A \times 100$$

(where A; the number of live cells immediately after inoculation, B; the number of live cells after 24 hours of culture).

That is, it was confirmed that the rate of bacteria reduction (%) = $[(6.0 \times 10) - (9.0 \times 10)] / (6.0 \times 10) \times 100$ = 99.9%.

<Experimental Example 2> Microbiological test

The container of Example 4 and three types of commercially available plastic containers which were purchased as comparative examples were used. Cherry tomatoes were purchased from the market, 200 g of cherry tomatoes were put in each container and stored in a 25°C thermostat, and microbiological qualities and acid values were measured on Days 3 and 7.

As microbiological test items, general bacteria, E. coli, mold, and pH were measured.

In the test method, a suspension obtained by moving a sample of 2 fruits of about 20 g each was a stomacher bag, diluting the sample by adding 10 times of sterile distilled water, and homogenizing the sample by strongly shaking with a stomacher for two minutes was used as a test solution. The suspension was continuously diluted 10 times by using sterile distilled water, general bacteria were inoculated into the aerobic account plate petrifilm (3M Microbiology, USA) and cultured at 35°C for 48 hours, an E. coli/coliform group was inoculated into the E. coli/coliform count petrifilm (3M Microbiology, USA) and cultured at 35°C for 48 hours, and mold was inoculated into the yeast & old count plate petrifilm (3M Microbiology, USA) and cultured at 25°C for 5 to 7 days. The number of bacteria was visually measured and expressed as colony forming units (CFU).

The pH was measured using a pH meter with the flesh destroyed.

As a result of the test, mold was observed with the naked eye on Day 3, but did not invade the pulp, and thus it was found to be ingestible. As the microbial quality, in the comparison containers, the general bacteria exceeded $10^7$ CFU/g, and thus it was seemed that the initial decomposition proceeded.

The pH change according to the storage period gradually increased from the initial value of 4.4, but there was no change was observed depending on the containers.

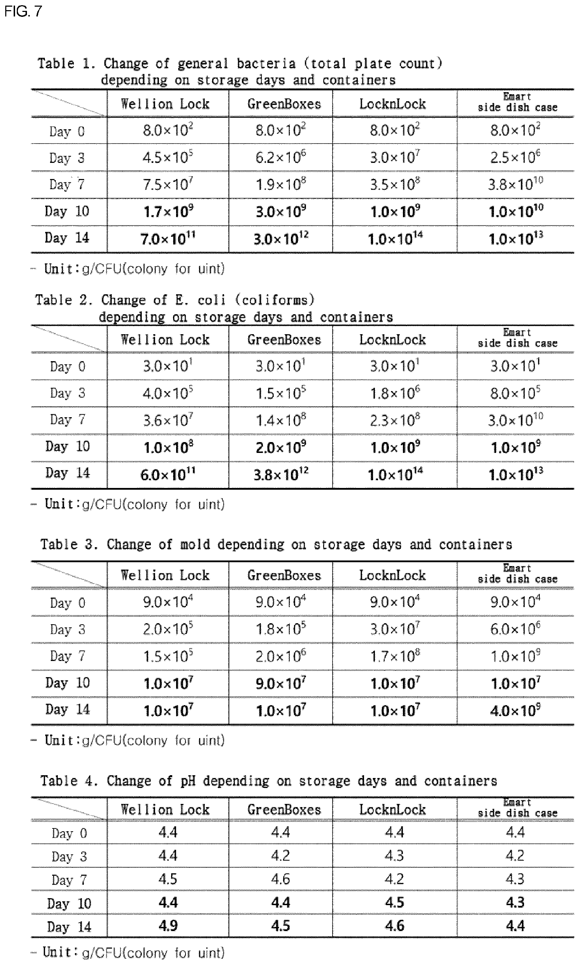

The test results are shown in FIG. 7.

<Experimental Example 3> Freshness measurement

Next, the freshness of the vegetables stored in the container manufactured in Example 4 was tested. As results of experiments of comparing cherry tomatoes in a food storage box (white oval container) of Example 4 and the commercially available food storage boxes (Comparative Examples 1 to 3) for 10 days at room temperature (25°C, 50% RH), the effects of maintaining freshness were measured.

As a result of the test, there was a slight difference in preservation of foods in LDPE treated with Macsumsuk powders and LDPE not treated with Macsumsuk powders depending on the kinds of food and the freshness. At normal temperature (25°C, 50%RH), the storage condition of the LDPE treated with Macsumsuk powders was satisfactory up to about four days, and that of the LDPE not treated with Macsumsuk powders was satisfactory up to about two days.

Moisture was generated from the second day in both of the LDPE treated with Macsumsuk powders and the LDPE not treated with Macsumsuk powders. More moisture was generated in the LDPE not treated with Macsumsuk powders.

From the fourth day, the texture of lettuce in the LDPE not treated with Macsumsuk powders was remarkably deteriorated, and yellowing began. There was no change in color of lettuce in the LDPE treated with Macsumsuk powders.

From the sixth day, darkening was shown in the lettuce in the LDPE not treated with Macsumsuk powders.

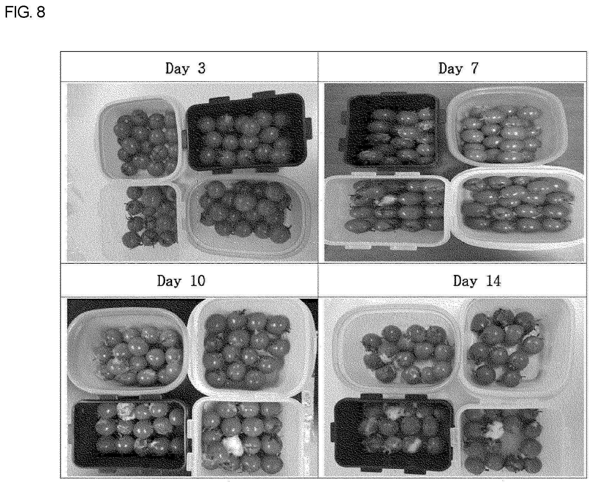

In FIG. 8, the results of the freshness test are shown by date.

It will be apparent to those skilled in the art that various modifications and variations can be made in the present invention without departing from the spirit or scope of the invention as defined in the appended claims.

This invention can be implemented in many different forms without departing from technical aspects or main features. Therefore, the implementation examples of this invention are nothing more than simple examples in all respects and will not be interpreted restrictively.

Industrial Applicability

The masterbatch prepared according to the present invention can be applied to a plastic pack, a plastic container, a food collection container, a plastic pipe, a seafood packaging film, an agricultural product packaging film, a fruit packaging film, a food and beverage packaging film, an exhibition storage film, a dust mask, a water and sewage piping material, medical plastic device and instrument, an sanitary container, a humidifier material, a cutting board, an animal and vegetable product packaging material, medical drug storage plastic film and molding product, a construction material, a dish dryer plastic material, a table board, a bed board, a fish farm material, an aquarium material, a livestock product processing material, a filter for water purification, a guard, medical supplies, a bedding pillow, a sheet, an electric wire, a material for marine equipment (plastic material requiring resistance to seaweeds and microorganisms), a marine buoy, a net, a rope, a mat sheet, blankets, an agricultural and farming film, a thermoplastic and thermosetting plastic container, a flooring sheet, a vehicle seat, a decor tile, electronic products such as TVs and mobile phones etc. Also, it may be molded in the form of a film or a sheet in addition to injection molded products.

**Claims**

1. A method of manufacturing an antibacterial plastic masterbatch, comprising:

a slurry manufacturing step of mixing a Macsumsuk pulverized product and water in a certain ratio to obtain a slurry;

a first mixing step of adding an antibacterial substance and a foaming agent to the slurry and further mixing the mixture to obtain a granulation mixture;

a powder molding step of molding the granulation mixture to a granular shape having an average particle size within a range of 0.1 to 1.5 m/m by using a granulator to obtain sintered Macsumsuk powders;

a second mixing step of preparing a pellet-shaped plastic raw material and mixing the material with the Macsumsuk powders to manufacture the pellet mixture;

an extruding step of stirring the pellet mixture and melting and extruding the pellet mixture in a condition of 180°C to 350°C; and

a cooling cutting step of cooling and cutting an extrudate obtained by the melting and extruding to manufacture a masterbatch.

2. The method of manufacturing an antibacterial plastic masterbatch according to claim 1, further comprising:

a firing step of firing the Macsumsuk powders after the powder molding step to have a shape in which empty spaces are formed inside thereof and pores are formed on surfaces;

wherein the empty spaces inside the Macsumsuk powders are filled with a plastic resin raw material melted in the extruding step upon pulverization.

3. The method of manufacturing an antibacterial plastic masterbatch according to claim 2,
wherein the Macsumsuk pulverized product is obtained in a size of 0.1 to 1.5 mm by firing Macsumsuk ore at a high temperature and performing wet pulverization.

4. The method of manufacturing an antibacterial plastic masterbatch according to claim 3,
wherein the Macsumsuk powders in the second mixing step are mixed to be included by 2 to 70 weight% with respect to 100 weight% of the pellet mixture.

5. The method of manufacturing an antibacterial plastic masterbatch according to claim 4,
wherein the antibacterial substance is silver nanoparticles.

6. The method of manufacturing an antibacterial plastic masterbatch according to claim 1,
wherein in the second mixing step, the prepared powders are pulverized, and the pulverized product is mixed with the plastic raw material.

FIG. 1

FIG. 2

FIG. 3

* Sample name : Macsumsuk powder
* Measurement temperature : 180°C

| WAVELENGTH ($\mu$m) | Spectral emissivity |
|---|---|
| 6,000 | 0,905 |
| 6,500 | 0,910 |
| 7,000 | 0,931 |
| 7,500 | 0,933 |
| 8,000 | 0,912 |
| 8,500 | 0,869 |
| 9,000 | 0,854 |
| 9,500 | 0,876 |
| 10,000 | 0,891 |
| 10,500 | 0,911 |
| 11,000 | 0,919 |
| 11,500 | 0,926 |
| 12,000 | 0,933 |
| 12,500 | 0,931 |
| 13,000 | 0,925 |
| 13,500 | 0,926 |
| 14,000 | 0,921 |

FIG. 4

FIG. 5

FIG. 6

FIG. 7

Table 1. Change of general bacteria (total plate count)
depending on storage days and containers

|  | Wellion Lock | GreenBoxes | LocknLock | Emart side dish case |
|---|---|---|---|---|
| Day 0 | $8.0 \times 10^2$ | $8.0 \times 10^2$ | $8.0 \times 10^2$ | $8.0 \times 10^2$ |
| Day 3 | $4.5 \times 10^5$ | $6.2 \times 10^6$ | $3.0 \times 10^7$ | $2.5 \times 10^6$ |
| Day 7 | $7.5 \times 10^7$ | $1.9 \times 10^8$ | $3.5 \times 10^8$ | $3.8 \times 10^{10}$ |
| Day 10 | $1.7 \times 10^9$ | $3.0 \times 10^9$ | $1.0 \times 10^9$ | $1.0 \times 10^{10}$ |
| Day 14 | $7.0 \times 10^{11}$ | $3.0 \times 10^{12}$ | $1.0 \times 10^{14}$ | $1.0 \times 10^{13}$ |

- Unit: g/CFU(colony for uint)

Table 2. Change of E. coli (coliforms)
depending on storage days and containers

|  | Wellion Lock | GreenBoxes | LocknLock | Emart side dish case |
|---|---|---|---|---|
| Day 0 | $3.0 \times 10^1$ | $3.0 \times 10^1$ | $3.0 \times 10^1$ | $3.0 \times 10^1$ |
| Day 3 | $4.0 \times 10^5$ | $1.5 \times 10^5$ | $1.8 \times 10^6$ | $8.0 \times 10^5$ |
| Day 7 | $3.6 \times 10^7$ | $1.4 \times 10^8$ | $2.3 \times 10^8$ | $3.0 \times 10^{10}$ |
| Day 10 | $1.0 \times 10^8$ | $2.0 \times 10^9$ | $1.0 \times 10^9$ | $1.0 \times 10^9$ |
| Day 14 | $6.0 \times 10^{11}$ | $3.8 \times 10^{12}$ | $1.0 \times 10^{14}$ | $1.0 \times 10^{13}$ |

- Unit: g/CFU(colony for uint)

Table 3. Change of mold depending on storage days and containers

|  | Wellion Lock | GreenBoxes | LocknLock | Emart side dish case |
|---|---|---|---|---|
| Day 0 | $9.0 \times 10^4$ | $9.0 \times 10^4$ | $9.0 \times 10^4$ | $9.0 \times 10^4$ |
| Day 3 | $2.0 \times 10^5$ | $1.8 \times 10^5$ | $3.0 \times 10^7$ | $6.0 \times 10^6$ |
| Day 7 | $1.5 \times 10^5$ | $2.0 \times 10^6$ | $1.7 \times 10^8$ | $1.0 \times 10^9$ |
| Day 10 | $1.0 \times 10^7$ | $9.0 \times 10^7$ | $1.0 \times 10^7$ | $1.0 \times 10^7$ |
| Day 14 | $1.0 \times 10^7$ | $1.0 \times 10^7$ | $1.0 \times 10^7$ | $4.0 \times 10^9$ |

- Unit: g/CFU(colony for uint)

Table 4. Change of pH depending on storage days and containers

|  | Wellion Lock | GreenBoxes | LocknLock | Emart side dish case |
|---|---|---|---|---|
| Day 0 | 4.4 | 4.4 | 4.4 | 4.4 |
| Day 3 | 4.4 | 4.2 | 4.3 | 4.2 |
| Day 7 | 4.5 | 4.6 | 4.2 | 4.3 |
| Day 10 | 4.4 | 4.4 | 4.5 | 4.3 |
| Day 14 | 4.9 | 4.5 | 4.6 | 4.4 |

- Unit: g/CFU(colony for uint)

FIG. 8

## INTERNATIONAL SEARCH REPORT

| International application No. |
|---|
| **PCT/KR2019/005008** |

**A. CLASSIFICATION OF SUBJECT MATTER**

*B29B 9/10(2006.01)i, B29B 9/12(2006.01)i, B29B 7/88(2006.01)i, B29B 7/82(2006.01)i, C08K 3/34(2006.01)i, C08K 3/08(2006.01)i, C08J 3/22(2006.01)i*

According to International Patent Classification (IPC) or to both national classification and IPC

**B. FIELDS SEARCHED**

Minimum documentation searched (classification system followed by classification symbols)

B29B 9/10; A23K 1/175; B05D 7/00; B05D 7/04; B29B 7/88; C01B 25/32; C08K 3/08; C08K 5/00; C09K 3/00; E04F 19/02; B29B 9/12; B29B 7/82; C08K 3/34; C08J 3/22

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)

eKOMPASS (KIPO internal) & Keywords: macsumsuk, pellet, plastic, granule, master batch, antimicrobial

**C. DOCUMENTS CONSIDERED TO BE RELEVANT**

| Category* | Citation of document, with indication, where appropriate, of the relevant passages | Relevant to claim No. |
|---|---|---|
| Y | KR 10-1544420 B1 (LEE, Yong Chul et al.) 18 August 2015<br>See claim 1. | 1 |
| A | | 2-6 |
| Y | JP 03-252304 A (ASAHI OPTICAL CO., LTD.) 11 November 1991<br>See the examples and claims 1-6. | 1 |
| A | KR 10-0573811 B1 (MACSUMSUK GM CO., LTD.) 24 April 2006<br>See claim 1. | 1-6 |
| A | KR 10-2009-0095130 A (LEE, Eung Woo) 09 September 2009<br>See paragraphs [0024], [0062] and claim 1. | 1-6 |
| A | KR 10-0948764 B1 (MACSUMSUK GM CO., LTD.) 23 March 2010<br>See paragraphs [0018]-[0021] and claim 1. | 1-6 |

☐ Further documents are listed in the continuation of Box C.　　☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br><br>11 SEPTEMBER 2019 (11.09.2019) | Date of mailing of the international search report<br><br>**11 SEPTEMBER 2019 (11.09.2019)** |
| Name and mailing address of the ISA/KR<br>Korean Intellectual Property Office<br>Government Complex Daejeon Building 4, 189, Cheongsa-ro, Seo-gu, Daejeon, 35208, Republic of Korea<br>Facsimile No. +82-42-481-8578 | Authorized officer<br><br><br>Telephone No. |

Form PCT/ISA/210 (second sheet) (January 2015)

18

| Patent document cited in search report | Publication date | Patent family member | Publication date |
|---|---|---|---|
| KR 10-1544420 B1 | 18/08/2015 | None | |
| JP 03-252304 A | 11/11/1991 | JP 2958037 B2 | 06/10/1999 |
| KR 10-0573811 B1 | 24/04/2006 | None | |
| KR 10-2009-0095130 A | 09/09/2009 | KR 10-0955095 B1<br>KR 10-0998690 B1 | 28/04/2010<br>07/12/2010 |
| KR 10-0948764 B1 | 23/03/2010 | None | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101334283

- KR 1001334283